**Europäisches Patentamt**

**European Patent Office**

**Office européen des brevets**

(19)

(11) Veröffentlichungsnummer: **0 068 287**
**A2**

(12) ## EUROPÄISCHE PATENTANMELDUNG

(21) Anmeldenummer: **82105241.2**

(22) Anmeldetag: **15.06.82**

(51) Int. Cl.³: **C 05 G 3/00**

(30) Priorität: **16.06.81 DE 3123938**

(43) Veröffentlichungstag der Anmeldung: **05.01.83**
**Patentblatt 83/1**

(84) Benannte Vertragsstaaten: **AT BE CH FR GB IT LI NL SE**

(71) Anmelder: **Fraunhofer-Gesellschaft zur Förderung der angewandten Forschung e.V., Leonrodstrasse 54, D-8000 München 19 (DE)**

(72) Erfinder: **Scholze, Horst, Prof. Dr., Georg-Eydel-Strasse 2, D-8700 Würzburg (DE)**
Erfinder: **Schmidt, Helmut, Dr., Tilman-Riemenschneider-Strasse 15, D-8706 Höchberg (DE)**

(74) Vertreter: **Barz, Peter, Dr. et al, Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8, D-8000 München 40 (DE)**

(54) **Depotwerkstoffe auf Basis von geblähtem Perlit oder ähnlichen porösen Trägern, Verfahren zu ihrer Herstellung und ihre Verwendung.**

(57) Depotwerkstoffe auf Basis von geblähtem Perlit oder ähnlichen porösen Trägern, die Düngemittel, Pestizide oder andere Wirkstoffe enthalten und verzögert abgeben, werden dadurch hergestellt, daß man den Träger hydrophobiert, den hydrophobierten Träger einer Vakuum- oder Druckimprägnierung mit einer konzentrierten wäßrigen Lösung des Wirkstoffes unterzieht und den imprägnierten Träger trocknet. Gegebenenfalls kann der imprägnierte, getrocknete Träger noch mit einer Ummantelung z.B. aus Phosphaten versehen werden. Die erhaltenen Depotwerkstoffe zeichnen sich durch hohe Beladungsraten und verbesserte Langzeitwirkung aus.

EP 0 068 287 A2

- 2 -

Depotwerkstoffe auf Basis von geb* * * * * *, von geblähtem Perlit oder ähnlichen porösen Trägern, Verfahren zu ihrer Herstellung und ihre Verwendung

Die Zufuhr ausreichender Nährstoffmengen ist für landwirtschaftlich intensiv genutzte Böden zur Aufrechterhaltung hoher Erträge unerläßlich. Hierbei werden gewöhnlich Stickstoffverbindungen in Form von Nitraten oder Ammoniumsalzen ausgebracht. Beide Salztypen sind leicht wasserlöslich und unterliegen - besonders bei hohen Niederschlagsmengen - starken Auswaschvorgängen, so daß nur ein geringer Prozentsatz von den Pflanzen genutzt werden kann. Als Folge davon sind erhöhte Düngergaben und eine mehrmalige Nachdüngung innerhalb einer Vegitationsperiode erforderlich.

Ähnliche Probleme treten in der Landwirtschaft und in anderen Bereichen bei der Anwendung von Insektiziden, Fungiziden, Herbiziden, Pflanzenwachstumsregulatoren und anderen Wirkstoffen auf.

Es sind deshalb bereits Depotwerkstoffe entwickelt worden, die eine verzögerte, kontrollierte Wirkstoffabgabe ermöglichen. Diese Depotwerkstoffe bestehen z.B. aus einem körnigen Wirkstoff, der mit einer Ummantelung aus organischem oder anorganischem Material wie Kautschuk, Schwefel, Wachs, Gips, Zement, Bitumen oder diversen Kunststoffen versehen ist.

Eine andere Art von Depotwerkstoffen besteht aus porösen Trägern, die mit dem Wirkstoff imprägniert sind. In diesem Zusammenhang ist es z.B. aus der US-PS 2 779 670 bekannt, Perlit und ähnliche poröse Trägermaterialien mit einer Düngesalzlösung zu imprägnieren und das imprägnierte Material anschließend zu trocknen.

Die auf diese Weise hergestellten Depotwerkstoffe haben jedoch den Nachteil, daß der Wirkstoff, z.B. das Düngemittel, zum größten Teil an der Oberfläche der porösen Teilchen haftet (d.h. nicht in den Poren eingeschlossen ist) und deshalb leicht ausgewaschen wird.

Aufgabe der Erfindung ist es daher, Depotwerkstoffe bereitzustellen, die eine verzögerte und kontrollierte Wirkstoffabgabe über einen verlängerten Zeitraum ermöglichen. Ein weiteres Ziel besteht darin, körnigen Depotwerkstoffen der genannten Art eine höhere mechanische Stabilität zu verleihen.

Überraschenderweise wurde nun gefunden, daß Depotwerkstoffe der gewünschten Art erhalten werden können, wenn man geblähten Perlit oder ähnliche poröse Träger hydrophobiert und den hydrophobierten Träger einer Vakuum- oder Druckimprägnierung mit der Wirkstofflösung unterwirft. Die Vakuum- oder Druckimprägnierung allein ermöglicht nicht die gewünschten Produkteigenschaften, da die Wirkstofflösung zwar zunächst in die Poren eindringt, spätestens aber beim Trocknen durch Oberflächen- und Kapillarkräfte wieder aus den Poren austritt und an der Kornoberfläche des Trägers zu einer Salzkruste trocknet. Dieses Phänomen wird erfindungsgemäß dadurch verhindert, daß man den Träger vor dem Imprägnieren zumindest an der Kornoberfläche hydrophobiert. Hierdurch kann die Wirkstofflösung nicht mehr durch Oberflächen- und Kapillarkräfte aus den Porenöffnungen herauskriechen und in der Trocknungsstufe erfolgt eine praktisch ausschließliche Verdampfung des in den Poren eingeschlossenen Lösungsmittels in der Gasphase, bei der der Wirkstoff in fester Form in den Poren zurückbleibt.

Gegenstand der Erfindung sind das in den Patentansprüchen gekennzeichnete Verfahren, die nach diesem Verfahren herstellbaren Depotwerkstoffe und deren Verwendung insbesondere zur Bodenbehandlung bei Zimmerpflanzen, im Gartenbau und in der Landwirtschaft.

- 4 -

Die Imprägnierung des hydrophobierten Trägers mit der Wirkstofflösung kann im Verfahren der Erfindung sowohl unter erhöhtem als auch unter vermindertem Druck erfolgen. Vorzugsweise wendet man aber eine Vakuumimprägnierung an und die Erfindung wird nachstehend anhand dieser bevorzugten Ausführungsform näher erläutert.

Ausgangsmaterial für die erfindungsgemäßen Depotwerkstoffe sind geblähter Perlit oder ähnliche organische oder anorganische, poröse, offenporige Trägermaterialien, wie Bims, Schaumgläser und Mikrohohlglasperlen mit Loch. Geblähter Perlit ist jedoch das bevorzugte Trägermaterial. Vorzugsweise hat der Perlit eine offene Porosität von 5 bis 90 %, insbesondere 30 bis 90 %, eine Schüttdichte von 50 bis 150 kg/m³ und eine Korngröße von 0,2 bis 5 mm.

Die zur Beladung verwendeten Wirkstoffe richten sich nach dem beabsichtigtem Verwendungszweck des Depotwerkstoffes. Als Düngemittel werden gewöhnlich leicht wasserlösliche Stickstoffsalze verwendet, z.B. Kalium- oder Ammoniumnitrat, Ammoniumsulfat oder deren Gemische. Alternativ oder zusätzlich können auch andere Nitrate, Sulfate, Phosphate, Metall- und/oder Spurenelementsalze eingesetzt werden.

Wirkstoffe für andere Anwendungsbereiche sind z.B. Pestizide, insbesondere Insektizide und Fungizide, Herbizide, Pflanzenwachstumsregulatoren etc. Der Depotwirkstoff kann jedoch auch ein Desinfektionsmittel, ein Farbstoff oder ein beliebiger anderer Wirkstoff sein.

Die Wirkstoffe werden im erfindungsgemäßen Verfahren als hochkonzentrierte, gesättigte, vorzugsweise heißgesättigte Lösungen in Wasser oder Lösungsmittelsystemen aus Wasser und einem damit mischbaren organischen Lösungsmittel angewandt.

- 5 -

Vor dem Imprägnieren wird der Träger mit einem üblichen Hydrophobisierungsmittel behandelt. Geeignete Hydrophobisierungsmittel sind z.B. Siliconöle, Paraffine, Wachse und perfluorierte Verbindungen. Vorzugsweise verwendet man jedoch Siliconöle, z.B. Polydimethylsiloxanöle, die gewöhnlich als 0,5 bis 1prozentige wäßrige Emulsionen eingesetzt werden. Die Hydrophobierung des Trägers kann auf beliebige Weise erfolgen, z.B. durch Aufsprühen oder Imprägnieren. Nach dem Hydrophobieren kann der Träger gegebenenfalls getrocknet werden.

Der hydrophobierte Träger wird dann in ein evakuierbares Gefäß eingebracht und mit einer Vakuumpumpe evakuiert. Für die praktische Durchführung eignen sich Drücke von etwa 1 bis 50 mbar (Wasserstrahlvakuum), vorzugsweise 1 bis 30 mbar.

In einem zweiten Gefäß, das mit dem evakuierbaren Beladungsgefäß verbunden ist, befindet sich die konzentrierte Wirkstofflösung, und sobald ein ausreichender Unterdruck in dem Beladungsgefäß erreicht ist, öffnet man das Sperrventil in der Verbindungsleitung zwischen beiden Gefäßen und läßt die Wirkstofflösung in das evakuierte Beladungsgefäß strömen. Nach ausreichender Imprägnierungsdauer, z.B. 10 bis 60 Minuten, belüftet man gegebenenfalls das Gefäß und trennt die überschüssige Wirkstofflösung von dem nun beladenen Träger ab, z.B. durch Absaugen, Abdekantieren oder Abfiltrieren.

Die Imprägnierung kann bei beliebigen Temperaturen, z.B. bei Raumtemperatur oder auch bei erhöhten Temperaturen bis zum Siedepunkt des verwendeten Lösungsmittels erfolgen. In der Praxis wird jeweils eine Optimierung versucht werden zwischen den für eine hohe Sättigungskonzentration der Wirkstofflösung günstigen höheren Temperaturen und den für ein ausreichendes Vakuum günstigen niedrigeren Temperaturen.

Der imprägnierte Träger, dessen Poren mit der Wirkstofflösung gefüllt sind, wird hierauf auf übliche Weise getrocknet. Die Trocknung erfolgt bei Temperaturen, bei denen der Wirkstoff noch nicht zersetzt wird, z.B. 100 bis 300°C. Die Trocknungsdauer richtet sich nach der Temperatur. So sind für die Trocknung von Perlit, der mit wäßrigen Salzlösungen beladen ist, bei Raumtemperatur an der Luft ca. 1 bis 2 Wochen, bei 100°C ca. 1 Tag erforderlich. Für die Trocknung können übliche Vorrichtungen angewandt werden, z.B. Trockenschränke, Umluftöfen oder auch Wirbelschichttrockner.

Auf die beschriebene Weise können während eines einstufigen Beladungsvorganges Salzbeladungsraten von z.B. 200 kg/m³ Perlit-Schüttvolumen durch Imprägnierung bei Raumtemperatur und einem Druck von 25 mbar erreicht werden. Um die Beladungsrate weiter zu erhöhen, kann man den imprägnierten Träger nach dem Trocknen gegebenenfalls einer oder mehreren erneuten Imprägnierbehandlungen unterwerfen.

Die im erfindungsgemäßen Verfahren erhaltenen Depotwerkstoffe zeichnen sich durch eine außergewöhnliche Langzeitwirkung aus. So ergaben z.B. Auswasch-Vergleichsversuche mit ungeschütztem bzw. erfindungsgemäß in Perlit eingeschlossenem Salz eine Verlängerung der Auswaschzeit um den Faktor 10 bis 20.

Eine weitere Verbesserung des Salzabgabeverhaltens läßt sich erzielen, wenn das Trägerkorn noch zusätzlich ummantelt wird. Günstig ist die Ummantelung auch, wenn eine hohe Kornfestigkeit erwünscht ist. Darüber hinaus lassen sich über die Ummantelung weitere Funktionen (z.B. schwer-

- 7 -

lösliche Düngesalze, wie Phosphate) einbauen. Auf diesem Weg ist die Herstellung preisgünstiger, mehrfunktioneller Düngemittel mit Depotwirkung möglich.

Die zur Ummantelung verwendeten Materialien unterliegen keiner bestimmten Beschränkung und werden je nach dem Verwendungszweck des Depotwerkstoffs ausgewählt. Geeignet sind organische und anorganische Materialien, wie Kautschuk, Schwefel, Wachs, Gips, Zement, Bitumen und diverse Kunststoffe. Soll z.B. Perlit als Depotwerkstoff für leichtlösliche Stickstoff- und/oder Kalisalze dienen, die in Kombination mit schwerlöslichen Salzen eingesetzt werden (z. B. NPK-Düngemittel mit Langzeitwirkung), so kann die Ummantelung z.B. aus schwerlöslichen Phosphaten (z.B. $CaHPO_4$) oder Gemischen von Phosphaten mit Anhydrit bestehen.

Durch Variation des Verhältnisses von Phosphat zu Bindemittel (z.B. Anhydrit, Gips, Cellulosederivate oder organische Binder) kann sowohl eine Erhöhung der Druckfestigkeit des Produkts als auch eine Beeinflussung der Reaktivität der Ummantelung bei Kontakt mit Wasser erzielt werden. Beispielsweise kann man das Verhältnis von schwer-löslichem Phosphat zu Bindemittel so einstellen, daß die Ummantelung bei Kontakt mit Wasser rasch zerfällt (d.h. unmittelbarer Zugriff auf die Stickstoff- und Kalikomponenten) oder sich erst langsam löst und somit regulativ (Membraneffekt) auf die Kalium- und Stickstoffabgabe einwirkt.

Die Ummantelung des imprägnierten Trägerkorns kann auf übliche Weise erfolgen, z.B. durch Besprühen oder Granulieren.

Die erfindungsgemäßen Depotwerkstoffe können in den verschiedensten Anwendungsbereichen eingesetzt werden. Sofern sie Agrochemikalien als Wirkstoffe enthalten, werden sie z.B. zur Bodenbehandlung beim Zimmerpflanzen, im Gartenbau und in der Landwirtschaft angewandt. Dabei können sie als

- 8 -

Oberschicht auf den Boden aufgebracht oder auch in den Boden eingebracht werden. Für spezielle Anwendungen können die Depotwerkstoffe der Erfindung noch mit üblichen Additiven und Hilfsstoffen verarbeitet werden, z.B. mit Farbstoffen, Pigmenten, pH-Indikatoren, Puffern, Ionenaustauschern, Füllstoffen, Siccativen etc.

Die folgenden Beispiele erläutern die Erfindung.

Hydrophobierung von geblähtem Perlit

B e i s p i e l    1

Aus einem handelsüblichen Silicon-Hydrophobisierungsmittel (Silicon-Imprägniermittel Nr. 0850 vom der Firm Roth) und Wasser wird eine 1gewichtsprozentige Emulsion hergestellt. Geblähter Perlit wird in dieser Emulsion im Tauchverfahren 15 Minuten behandelt, anschließend auf einem Sieb oder Blech ausgebreitet und in einem Trockenschrank 15 bis 20 Minuten bei 300°C nachbehandelt.

B e i s p i e l    2

Geblähter Perlit wird in einen evakuierbaren Behälter eingefüllt. Nach dem Evakuieren des Behälters mit einer Wasserstrahlpumpe wird die Emulsion des  Hydrophobisierungsmittels aus Beispiel 1 zugeleitet, worauf man den Perlit analog Beispiel 1 weiterverarbeitet.

Beladung des hydrophobierten Perlits

Die Beladung erfolgt bei Raumtemperatur in einer Apparatur aus zwei Behältern, die über eine Leitung mit Absperrventil miteinander verbunden sind und über zusätzliche Leitungen mit einer Vakuumpumpe (z.B. einer Wasserstrahlpumpe) zur Er-

- 9 -

zeugung eines Vakuums in den Behältern verbunden sind. Behälter 1 wird mit hydrophobiertem geblähtem Perlit gefüllt. In Behälter 2 befindet sich eine wäßrige Salzlösung, mit der der Perlit beladen werden soll.

Als erster Schritt wird der mit Perlit gefüllte Behälter 1 evakuiert. Bei Verwendung eines Behälters mit einem Volumen von 250 ml und einem Perlit-Schüttvolumen von 200 ml beträgt die Evakuierungsdauer mit einer Wasserstrahlpumpe 15 Minuten. Längere Evakuierungszeiten zeigen keinen meßbaren Einfluß auf die Beladbarkeit des hydrophobierten geblähten Perlits. Bei kürzeren Zeiten oder geringerem Vakuum (p > 25 mbar) ist die erzielbare Beladung deutlich schlechter.

Als zweiter Schritt wird die wäßrige Salzlösung aus Behälter 2 nach Öffnen des Ventils in der Verbindungsleitung zwischen den beiden Behältern von Behälter 1 angesaugt. Nach 15-minütiger Einwirkung sind die zugänglichen Hohlräume des Perlits gefüllt und die überschüssige Lösung wird wieder abgesaugt.

Als dritter Schritt wird der beladene Perlit entnommen und ca. 24 Stunden bei 100°C getrocknet.

In den folgenden Beispielen wird mit Lösungsansätzen bei 21°C gearbeitet, da die Löslichkeit der genannten Salze stark temperaturabhängig ist.

B e i s p i e l   3

200 ml hydrophobierter geblähter Perlit (Korngröße 2 bis 3,15 mm) werden mit einer gesättigten $NH_4NO_3$-Lösung, wie oben beschrieben, beladen.

- 10 -

Gewicht des Perlits vor der Beladung: 16,65 g
Gewicht des Perlits nach der Beladung und
Trocknung: 62,76 g

B e i s p i e l 4

Das Verfahren von Beispiel 3 wird wiederholt, jedoch verwendet man eine $KNO_3$-Lösung anstelle der $NH_4NO_3$-Lösung.

Gewicht des Perlits vor der Beladung: 16,12 g
Gewicht des Perlits nach der Beladung und
Trocknung: 30,92 g

B e i s p i e l 5

Das Verfahren von Beispiel 3 wird wiederholt, jedoch verwendet man eine $(NH_4)_2SO_4$-Lösung anstelle der $NH_4NO_3$-Lösung.

Gewicht des Perlits vor der Beladung: 15,02 g
Gewicht des Perlits nach der Beladung und
Trocknung: 44,70 g

B e i s p i e l 6

Das Verfahren von Beispiel 3 wird wiederholt, jedoch verwendet man anstelle des Perlits 100 ml Bims mit einer Korngröße von 2 bis 5 mm.

Gewicht des Bimses vor der Beladung: 36,01 g
Gewicht des Bimses nach der Beladung und
Trocknung: 62,12 g

Ummantelung des beladenen Perlits

Verfahren 1:

Unter Anwendung von exzentrisch laufenden Mischern mit vertikaler Drehachse und Schnellauf wird zunächst Perlit eingefüllt, dann Wasser eingedüst, hierauf trockenes Ummantelungsmaterial zugegeben, anschließend Wasser eingedüst und danach im Wechsel trockenes Ummantelungsmaterial und Wasser zugegeben.

Verfahren 2:

Anstelle des in Verfahren 1 verwendeten Mischers wird ein Granulierteller mit schräg stehender Drehachse und kleiner Drehgeschwindigkeit angewandt. Dieses Verfahren ermöglicht die Herstellung von dicken Beschichtungen (mehrere mm) und Agglomeraten.

B e i s p i e l    7

Zur Herstellung einer Ummantelung nach Verfahren 1 werden 1 m³ hydrophobierter, geblähter Perlit, 100 Liter Wasser und als Ummantelungsmaterialien 200 kg $CaSO_4$ und 100 kg $CaHPO_4$ verwendet.

Zur Bestimmung der Kornfestigkeit werden Druckversuche an Einzelkörnern (Durchmesser 3 bis 4 mm) durchgeführt. Bestimmt wird die Kraft, bei der der erste Riß auftritt. Hierbei ergeben sich folgende Resultate:

| Probe | Druckkraft (N) |
|---|---|
| Korn nicht ummantelt | 1 |
| Korn mit Ummantelung aus 200 kg $CaSO_4$ und 100 kg $CaHPO_4$ pro m³ Perlit | 5 |
| Korn mit Ummantelung aus 200 kg $CaSO_4$ und 200 kg $CaHPO_4$ pro m³ Perlit | 9 |

- 13 -

Patentansprüche

1. Verfahren zur Herstellung von Depotwerkstoffen auf Basis von geblähtem Perlit oder ähnlichen porösen Trägern, die Düngemittel, Pestizide oder andere Wirkstoffe enthalten und verzögert abgeben, bei dem man den porösen Träger mit einer konzentrierten Lösung des Wirkstoffes imprägniert und den imprägnierten Träger trocknet, dadurch g e k e n n z e i c h n e t , daß man den Träger vor dem Imprägnieren hydrophobiert und den hydrophobierten Träger einer Vakuum- oder Druckimprägnierung mit der Wirkstofflösung unterzieht.

2. Verfahren nach Anspruch 1, dadurch gekennzeichnet, daß man die Imprägnierung des Trägers nach dem Trocknen noch ein- oder mehrmals wiederholt.

3. Verfahren nach Anspruch 1 oder 2, dadurch gekennzeichnet, daß man den getrockneten imprägnierten Träger zusätzlich mit einer Ummantelung versieht.

4. Verfahren nach mindestens einem der Ansprüche 1 bis 3, daß man den Träger mit einem Siliconöl hydrophobiert.

5. Verfahren nach mindestens einem der Ansprüche 1 bis 4, daß man den hydrophobierten Träger mit einer heißgesättigten Lösung des Wirkstoffes imprägniert.

6. Verfahren nach mindestens einem der Ansprüche 1 bis 5, dadurch gekennzeichnet, daß man eine Vakuumimprägnierung bei 1 bis 50 mbar durchführt.

7. Verfahren nach mindestens einem der Ansprüche 1 bis 6, dadurch gekennzeichnet, daß man ein wasserlösliches Düngesalz als Wirkstoff verwendet.

8. Verfahren nach mindestens einem der Ansprüche 3 bis 7, dadurch gekennzeichnet, daß man den getrockneten imprägnierten Träger mit einer Ummantelung aus schwerlöslichen Phosphaten oder Mischungen aus Phosphaten und Anhydrit versieht.

9. Depotwerkstoffe auf Basis von geblähtem Perlit oder ähnlichen porösen Trägern, die Düngemittel, Pestizide oder andere Wirkstoffe enthalten und verzögert abgeben, herstellbar nach dem Verfahren eines der Ansprüche 1 bis 8.

10. Verwendung der Depotwerkstoffe nach Anspruch 9 zur Bodenbehandlung bei Zimmerpflanzen, im Gartenbau und in der Landwirtschaft.